# EUROPEAN PATENT SPECIFICATION

(11) **EP 0 163 483 B1**
(45) Date of publication and mention of the grant of the patent: **20.10.1993**
(21) Application number: 85303616.8
(22) Date of filing: 22.05.1985
(51) Int. Cl.: A01J 5/04

(54) **Automatic milking apparatus**
Automatische Melkanlage
Machine à traire automatique

(30) Priority: 31.05.1984 GB 8413861; 06.12.1984 GB 8430804
(43) Date of publication of application: 04.12.1985
(60) Divisional application: 90200357.3
(73) Proprietor: BRITISH TECHNOLOGY GROUP LIMITED, London SE1 6BU (GB)
(72) Inventor: Griffin, Tony Kenneth, Wokingham Berkshire (GB); Grindal, Robert Joseph, Reading Berkshire RG2 9DN (GB); Marshall, Barry Reginald, Ramsden Oxford OX73AP (GB)
(74) Representative: Trevor-Briscoe, David William

(56) References cited:
- DE-B- 1 053 853
- GB-A- 394 983
- GB-A- 1 451 995
- GB-A- 2 057 845
- GB-A- 2 099 677

## Description

The present invention relates to automatic milking apparatus.

The basic components of a milking installation, at least as far as the present invention is concerned, are (1) a cluster of four teat cups including (2) a clawpiece, (3) a suction pump and (4) a pulsator.

Each teat cup comprises a rigid outer casing containing a flexible liner which fits over one of the cow's teats. A pressure of approximately 50 kPa below atmosphere is continuously applied to the "core" space enclosed by the liner. Apart from encouraging a flow of milk into the core space, this negative pressure is also effective to clamp the teat liner on to the teat - this is referred to as "adhesion".

The pressure applied to the annular space between the liner and the rigid casing alternates, however, between 50 kPa below atmosphere and atmosphere thanks to the action of the pulsator. At the first of these values, there is zero pressure differential across the liner and milk is sucked from the teat into the core space. This milk passes down a flexible "short milk" tube into one of the four tubular inlet "nipples" projecting upwardly from the interior volume of a special junction unit called a "clawpiece". From there the milk is drawn down through an outlet nipple and via a "long milk" tube to an appropriate receptacle or pipeline. The other three nipples of the clawpiece are connected to similar teat cups and thence to the other teats of the cow's udder.

It will be appreciated that in operation of the cluster, the passage of milk from the teats is intermittent. Thus in a complete pulsation cycle, as the pulsation chamber is re-evacuated from the completely collapsed condition, say, the liner in contact with the teat widens and the size of the teat sinus increases. Simultaneously the liner begins to open beneath the teat and, when sufficiently open, milk starts to flow through the streak canal. Continued expansion of the streak canal and opening of the liner follows until the liner is fully open. Milk begins flowing from the teat when the liner is about half open and continues until the liner is about half closed. The teat sinus has already become somewhat smaller by this time and the region of the compressed streak canal appears elongated due to complete collapse of the liner on the teat. As the liner closes, milk flow ceases before complete collapse beneath the teat, indicating clearly that cessation of milk flow is not caused by the liner cutting off the vacuum to the end of the teat but by the force exerted by the closing liner itself. The cycle then repeats, the next flow of milk beginning when the liner is again about half open.

Clearly in any such system, there must be some means of partially releasing the vacuum within the fully collapsed liner in order that it can return towards its partially and later fully open state. Otherwise, the liner, once collapsed will remain so throughout the subsequent pulsation cycles.

Where the design of clawpiece is such that it will allow milk flow in both directions through the clawpiece, the liner vacuum can be released if desired by allowing some of the milk to flow back up the short milk tubes into the liner core. From 1930 onwards, it has been almost universal practice, however, to allow air to enter the liner core at this stage to reduce 'flooding' and cyclic vacuum variations associated with this back flow of milk and an appropriate air bleed has invariably been provided somewhere in the cluster for this purpose. Indeed from 1970 onwards, air bleeds to the clawpiece have been considered as essential.

Where a so-called "one-way" clawpiece is used, i.e. one allowing a downward flow of milk from the cows udder but not in the reverse direction, then it has been accepted that an air bleed must inevitably be present to allow a re-expansion of the liner as above described.

The same is true of the double chamber milking cluster described in GB 1451995 (Howse) where the one way valve is situated, not in the clawpiece but in the short milk tube. In this case, although Howse makes no mention of an air bleed, the periodic destruction of the liner core vacuum and its relation to the pulsation chamber's operation clearly identifies the teat cup as being one in which just such an air bleed was in fact present, namely the Wallace machine manufactured by J & R Wallace of Castle Douglas, Scotland.

The nearest prior art to the present invention is probably NZ-A-152498 (Seaborne) in which the possibility is mentioned of sealing off the exit ports from the inlet nozzles of a milking machine clawpiece by four disc-like valves of plastics material. These are designed to prevent a back flow of milk to relieve the vacuum in the teat cups and although it is not absolutely clear, there is an implication that there is no air bleed present in the machine of which the clawpiece forms a part. What is clear, however, is that the design of the Seaborne clawpiece is such that as milk begins to flow Into the clawpiece at the commencement of the milking process, it will trap in the clawpiece chamber a pocket of air that will remain there throughout. This is a deliberate design feature of the Seaborne clawpiece included so that the valves will bounce up and down in response to milk flow through the clawpiece. In so doing, the valves will make a tapping noise as they strike the clawpiece cap to give an indication of continuing milk flow. Both the specific gravity of the material (plastics) chosen for the discs (low relative to that for milk) and the high drag associated with their disc-shape form will prevent the Seaborne valves from closing quickly enough to prevent air from being drawn back from this air pocket past the still-open valves to the teat cups, especially towards the end of the milking process.

With both the Howse and the Seaborne devices, the presence of air in the system means that there is a loss of adhesion at the end of milking and the teat cup rides up making the liner less effective and leading to a prolonged "dribble" period. Secondly, an effect technically known as "lipolysis", is produced by too fierce agitation of the milk which shears the fat globules in the milk and frees the fatty acids producing a bitter taste. Because of the dynamics of milk transport, lipolysis is particularly evident in milking parlour systems in which the milk is piped direct through "high lines" (i.e. above the level of cows) to a bulk tank from whence it can be emptied by the tanker. Lastly, the agitation tends to make the milk foam, making it difficult to meter and measure the milk.

The present application discloses an invention which cuts across all the accepted thinking on this subject in so far as it provides a method of automatic milking comprising the step of drawing the milk from the teat past one or more non-return valves without the introduction of air into the milk flow upstream of the valve or valves. Expressed in terms of apparatus, the present invention provides an automatic milking apparatus having one or more one-way clawpieces and pneumatically-isolated teat liners i.e. teat liners which are substantially sealed during milking from any supply of air to the milk-carrying core regions of the teat liners.

At this stage, it is not understood how the teat liners of the new apparatus are able to expand from their fully collapsed state without the introduction of air or milk from a source downstream of the liners. It seems clear that the vacuum cannot be initially released by milk flowing from the teats because this milk flow only commences when the liner is already half open again.

British Patent No. 2057845B (National Research Development Corporation) envisages two types of one-way clawpiece, one with an air admission hole in the clawpiece (upstream of the clawpiece valves) and one in which this hole is absent and the air bleed is provided in some other part of the milking apparatus of which the clawpiece forms a part. This latter type would be an eminently suitable one-way clawpiece for use in the automatic milking apparatus of the present invention.

It would be expected that the present invention would have advantages over a milking system using other than one-way clawpieces since it avoids the flow back of milk with all its undesirable consequences both as regards milking efficiency and transfer of disease. However present indications are that the combination of one or more one-way clawpieces with an absence of air bleed also results in significant operational advantages over previous air-bled systems using one-way clawpieces. Briefly these are: (1) with the better adhesion resulting from the present invention, ride-up is less likely to occur and the dribble period is significantly reduced; (ii) less damage to the milk (lipolysis) occurs as less fatty acids are released due to the much gentler system of the present invention in which excessive agitation is for the most part avoided altogether; (iii) foam is reduced for the same reason and can be further reduced if the milk is fed to the bottom of the recorder Jars; (iv) a shorter overall milking time is achieved (typically a one minute reduction, say, from the usual time of 5 or 6 minutes) and this allows a corresponding reduction in the amount of equipment required in the milking parlour (20% or so, say, for the time reduction quoted above); (v) there is also strong evidence to show that the new cluster will lead to an increased milk yield at least for animals not accustomed to a conventional system. Current trials show an increase in milk yield, or more exactly, lactation yield, of 5% or more, especially for newly calved animals.

As well as the advantages listed above, others may become apparent in time.

Throughout the specification, the term "cows" should not be narrowly interpreted but should be taken to include heifers and newly calved animals.

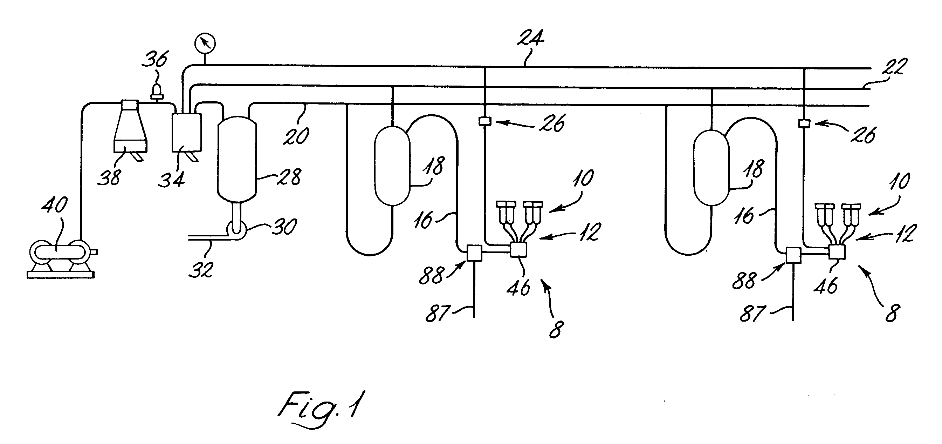

By way of example only, reference will now be made to the accompanying drawings in which Figure 1 shows a simplified and somewhat diagrammatic view of part of a typical milking installation according to the present invention;
Figure 2 is a plan view of a particular design of clawpiece with three of the four valve closure members omitted for clarity; and
Figure 3 is a vertical section taken along line A-A of Figure 2 In which, once again, only one of the closure members has been included and in which a pulsation distribution block, diagrammatically illustrated, has also been included.

For convenience, Figure 1 of the drawing only shows two milking units 8 although in practice there will typically be ten or so such units in an average-sized milking installation.

Each unit 8 consists basically of four teat cups 10, a one-way clawpiece 14 e.g. of the type previously described as being suitable in the introductory portions of the specification, four short milk tubes 12 connecting the teat cups to the clawpiece, and a long milk tube 16 taking the milk from the clawpiece to a recorder jar 18 (or other milk-measuring device).

The bottoms of the recorder jars are connected to a common milk conveyance pipeline 20. In an alternative embodiment (not shown), the jars 18 (or equivalent) are omitted and the long milk tubes 16 lead directly to the common milk conveyance pipeline 20.

Reference numeral 22 indicates the milking vacuum pipeline while the reference numeral 24 indicates the air line for the pulsator 26.

As shown, the common milk conveyance pipeline 20 leads to a receiver vessel 28 and in operation of the installation, a milk pump 30 operates to draw milk into the vessel 28 for discharge, via pipeline 32, to a bulk tank (not shown).

The installation is completed by the usual sanitary trap 34, vacuum regulator 36, interceptor 38 and vacuum pump 40.

Although particular designs of one-way clawpiece have been referred to above, it is envisaged that other designs of one-way clawpiece may also prove satisfactory. However, it is to be understood that whatever type of one-way clawpiece is chosen, it is important that there is no air-bleed present in the clawpiece when it is in use which could destroy the overall requirement that a pneumatically-isolated passageway should be present for the flow of milk through the apparatus.

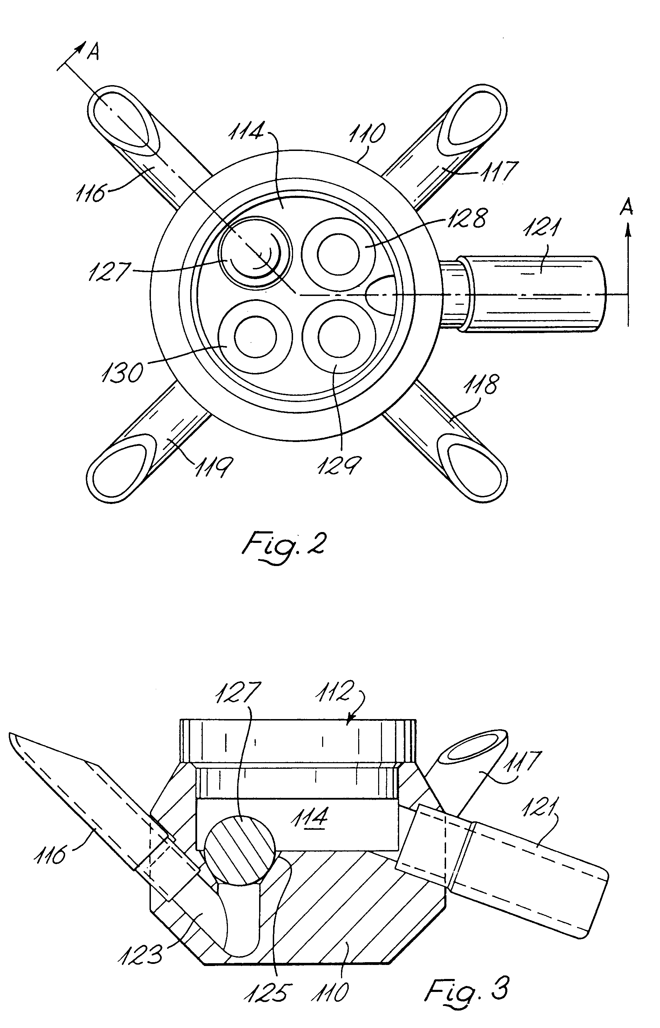

Referring now to Figures 2 and 3, reference numeral 110 in these two Figures indicates the clawpiece and reference numeral 112 (in Figure 3) indicates a pulsation distribution block (shown schematically) fitted on top of the clawpiece so as additionally to serve as a bung which closes the clawpiece cavity 114. No air admission holes are provided in the clawpiece and there is no transfer path between the pulsation distribution block 112 and the clawpiece 110 by which milk or air passing through the cavity 114 could enter the pulsation system or by which air from the pulsation system could enter cavity 114.

Leading upwardly from the clawpiece 110 are four inlet nipples 116,117,118,119 and leading downwardly is an outlet nipple 121 for connection with short milk tubes and long milk tubes respectively as indicated in the introduction.

The base portions of nipples 116-119 are retained in the outer ends of passages passing through the side walls of the clawpiece body to bend round and finally open into the internal floor surface of cavity 114.

One such passage 123 for nipple 116 is visible in Figure 3 from which it will be observed that the internal end of the passage is flared to provide a conical seating 125 for the closure member 127 shown in that Figure. The other nipples 117,118,119 will of course be associated with similar passages and closure members to those shown in Figure 3. The valve seats provided for the three other closure members are indicated in Figure 2 by the reference numerals 128,129,130.

In the illustrated embodiment of Figures 2 and 3, the balls providing the closure members are of stainless steel but other microscopically-smooth materials e.g. glass, could be used instead if desired. These materials, when compared with the flexible materials used for closing the valves in some of the prior art designs, have the advantages of having (1) microscopically smooth surfaces unlikely to harbour bacteria; and (2) surfaces which will, if anything, become more smooth with use. The feature of having the valve closure members in no way mechanically connected with their seats has the advantage of (3) allowing them to separate from their seats when cleaning fluids are passed through the clawpiece thereby fully exposing all parts of the closure members and the seats to the action of the cleaning fluids and (4) doing away with the small crevices that occur where a valve closure member is somehow attached to the structure in which it is housed (thereby avoiding the creation of protected regions into which the cleaning fluids have difficulty in penetrating fully). The feature of having the valve closure members of spherical or other similar shape is that (5) with time they will if anything gradually grind their seats to a shape in which they give better, rather than worse, long-term seating efficiency. The advantage of having the closure members gravity biassed towards the valve-closed position is (6) that this gives a positive action with no parts whose deterioration could substantially prejudice the effectiveness of this action. In other words the use of gravity in this respect should guarantee that irrespective of the age of clawpiece or its amount of use the valve closure members must inevitably adopt a valve closed position when there is no flow or insufficient flow into the clawpiece cavity to open them. This leads to the further advantage of (7) zero maintenance and inspection times for the valves. Lastly having the closure members of metal or other large thermal capacity material, has the advantage that (8) it enables these members to be raised during cleaning to the high temperatures required if the bacteria are to be killed.

In use, the clawpiece of Figures 2 and 3 is connected up with the short milk and long milk tubes as hereinbefore described. Under normal circumstances, the clawpiece will work like any other clawpiece but in the event, say, of one of the teats ceasing to give milk, any tendency to suck milk from the clawpiece cavity towards the teat concerned will simply move the relevant closure member into its valve-closed position to prevent any return flow of milk through the associated nipple. Similarly, in the event that adhesion is lost for any of the teat cups associated with the clawpiece, the resulting rush of milk into the clawpiece cavity will once again urge the closure members associated with the other nipples of the clawpiece into their valve-closed positions thereby preventing milk from the disconnected teat cup from reaching any of the other teat cups in the assembly.

In this way the spread of infection from clawpiece to teat or from teat to teat is minimised.

Reference is hereby made to divisional application EPA 90200357.3 (National Research Development Corporation).

## Claims

1. A method of automatic milking comprising the step of drawing the milk from the teat past one or more non-return valves (127) characterised in that this is done without the introduction of air into the milk flow upstream of the valve or valves.

2. An automatic milking apparatus having one or more one-way clawpieces (110) characterised in that the teat liners are substantially sealed during milking from any supply of air to the milk-carrying core regions of the teat liners.

## Patentansprüche

1. Verfahren zum automatischen Melken mit dem Schritt des Abziehens der Milch von der Zitze über eines oder mehrere Rückschlagventile (127), dadurch gekennzeichnet, daß dies ohne Einleitung von Luft in den Milchstrom stromaufwärts des Ventils oder der Ventile durchgeführt wird.

2. Automatische Melkanlage mit einem oder mehreren Einweg-Kupplungsteilen (110), dadurch gekennzeichnet, daß die Zitzenhüllen während des Melkens gegenüber Luftzufuhr zu den milchführenden Kernbereichen der Zitzenhüllen im wesentlichen abgedichtet sind.

## Revendications

1. Un procédé de traite automatique comprenant la phase d'aspiration du lait du trayon après une ou plusieurs soupapes de retenue (127), caractérisé, en ce que ceci est effectué sans introduction d'air dans le flot de lait en amont de la ou des soupape(s).

2. Une machine à traire automatique ayant un ou plusieurs collecteur(s) (110), caractérisée en ce que les manchons trayeurs sont pratiquement étanches, pendant la traite, à toute arrivée d'air dans les régions centrales transporteuses de lait des manchons trayeurs.
